# EUROPÄISCHE PATENTANMELDUNG

(11) **EP 4 094 983 A1**
(43) Veröffentlichungstag der Anmeldung: **30.11.2022**
(21) Anmeldenummer: 21176675.3
(22) Anmeldetag: 28.05.2021
(51) Int. Cl.: B60P 1/54

(54) **BEFESTIGUNGSANORDNUNG UMFASSEND EINEN HILFSRAHMEN MIT ZWEI LÄNGSTRÄGERN UND EINER OBERHALB DES HILFSRAHMENS ANGEORDNETEN KRANBASIS**

(71) Anmelder: EPSILON Kran GmbH., 5020 Salzburg (AT)
(72) Erfinder: STEINDL, Johannes, 5061 Elsbethen (AT); FABI, Daniel, 5222 Munderfing (AT)
(74) Vertreter: Torggler & Hofmann Patentanwälte - Innsbruck

(57) **Zusammenfassung**

Befestigungsanordnung (1) umfassend einen Hilfsrahmen (4) mit zwei Längsträgern (2) und einer oberhalb des Hilfsrahmens (4) angeordneten Kranbasis (3), wobei zwischen den zwei Längsträgern (2) wenigstens eine Befestigungskomponente (5) angeordnet ist, wobei die wenigstens eine Befestigungskomponente (5) in stoffschlüssiger Verbindung mit dem Hilfsrahmen (4) steht und die Kranbasis (3) durch wenigstens ein Befestigungsmittel (6) über die wenigstens eine Befestigungskomponente (5) mit dem Hilfsrahmen (4) lösbar verbindbar oder verbunden ist.

## Beschreibung

Die Erfindung betrifft eine Befestigungsanordnung umfassend einen Hilfsrahmen mit zwei Längsträgern und einer oberhalb des Hilfsrahmens angeordneten Kranbasis.

Eine Befestigungsanordnung eines Kranes auf einem Hilfsrahmen ist bereits aus der Schrift EP 2 085 295 B1 bekannt, wobei Bolzen in Nuten von Längsstreben des Hilfsrahmens geführt sind, um die Längsträger mit Querstreben zu verbinden, wobei sich die Querstreben zwischen zwei Längsträgern erstrecken und variabel an den Längsstreben durch die Bolzenverbindung anordenbar sind. Der Hilfsrahmen weist angeschraubte Verstärkungselemente auf, an denen weitere Bolzen gelagert sind und über welche eine Kranbasis mit den Querstreben verbunden werden. Die Querstreben sind vorgesehen, um eine Kranbasis mittels weiterer Bolzen an dem Hilfsrahmen über die Verstärkungselemente montierten zu können.

Aus dem Stand der Technik sind Lastkraftwagen mit einem Fahrzeugrahmen und einem Kran bekannt, wobei der Kran auf den Fahrzeugrahmen gespannt oder über angeschweißte Buchsen an dem Fahrzeugrahmen fixiert werden. Des Weiteren sind Lastkraftwagen mit einem Fahrzeugrahmen und einem Hilfsrahmen bekannt, wobei der Kran auf den Fahrzeugrahmen und den Hilfsrahmen gespannt wird.

Nachteilig am Stand der Technik ist, dass durch die konstruktive Ausgestaltung der Befestigung des Kranes am Lastkraftwagen Versteifungselemente am Hilfsrahmen und/oder am Fahrzeugrahmen notwendig sind und/oder aufgeschweißt werden müssen. Ohne derartige angeschweißte Versteifungselemente würde während dem Gebrauch des Lastkraftwagens durch Durchbiegungen der an der Befestigung beteiligten Komponenten und den hohen wirkenden Drehmomenten der Fahrzeugrahmen und/oder der Hilfsrahmen ramponiert werden. Bei einer Montage des Kranes sind gesonderte Verstärkungselemente notwendig, um die auftretenden Kräfte im Betrieb des Kranes aufnehmen zu können.

Die objektiv technische Aufgabe der vorliegenden Erfindung besteht daher darin, einen gegenüber dem Stand der Technik verbesserten Lastkraftwagen anzugeben, bei welchem die Nachteile des Standes der Technik zumindest teilweise behoben sind, und welcher sich insbesondere durch eine verbesserte Befestigung des Kranes auszeichnet.

Diese Aufgabe wird durch die Merkmale des Anspruchs 1 gelöst.

Es ist demnach erfindungsgemäß vorgesehen, dass zwischen den zwei Längsträgern wenigstens eine Befestigungskomponente angeordnet ist, wobei die wenigstens eine Befestigungskomponente in stoffschlüssiger Verbindung mit dem Hilfsrahmen steht und die Kranbasis durch wenigstens ein Befestigungsmittel über die wenigstens eine Befestigungskomponente mit dem Hilfsrahmen lösbar verbindbar oder verbunden ist.

Dadurch wird erst ermöglicht, dass keine gesonderten Verspannelemente und/oder Versteifungselemente zur Befestigung des Kranes am Hilfsrahmen notwendig sind, welche zudem zeitaufwändig montiert und/oder demontiert werden müssen.

Hinzu kommt die positive Eigenschaft, dass durch die wenigstens eine Befestigungskomponente über die Anordnung zwischen den zwei Längsträgern eine ästhetisch ansprechendere Befestigungsanordnung gegeben wird.

Des Weiteren wird ermöglicht, die Kranbasis direkt am Hilfsrahmen zu montieren, wodurch ein Abstand zwischen der Kranbasis und der Befestigungskomponente reduziert wird, wobei hohe Biegemomente, welche den Hilfsrahmen und/oder einen Fahrzeugrahmen beschädigen könnten, durch einen reduzierten Hebelarm der Befestigungsanordnung vermieden werden.

Durch die stoffschlüssige Verbindung wird eine sichere und besonders günstige Kraftübertragung zwischen der Kranbasis und dem Hilfsrahmen über die wenigstens eine Befestigungskomponente generiert.

Der Fachterminus stoffschlüssige Verbindung ist durch einen nicht lösbaren, auf atomaren und/oder molekularen Kräfte basierenden Zusammenhalt definiert, welcher beispielsweise Löten, Schweißen, Kleben und/oder Vulkanisieren umfasst.

Die wenigstens eine Befestigungskomponente kann beispielsweise auch als Teil des Hilfsrahmens und/oder einer Hilfskonstruktion des Hilfsrahmens ausgebildet sein und/oder zusätzlich durch formschlüssige und/oder kraftschlüssige Verbindungen gestützt werden.

Der Hilfsrahmen, umfassend die zwei Längsträger, ist derart breit auszulegen, dass als Längsträger auch beispielsweise zumindest zwei - in Gebrauchsstellung des Hilfsrahmens - seitlich einer Längserstreckung des Hilfsrahmens angeordnete Profilteile eines Kastenprofils umfasst sind. Im Allgemeinen können die Längsträger zum Beispiel stoffschlüssig mit Querträgern des Kastenprofils als Hilfsrahmen verbunden sein, dies ist jedoch nicht zwingend erforderlich. Die Anzahl an Längsträgern ist im Allgemeinen beliebig.

Vorteilhafte Ausführungsformen der Erfindung sind in den abhängigen Ansprüchen definiert.

Besonders bevorzugt ist die Befestigungsanordnung an einem Fahrzeug, insbesondere Forstanhänger oder Holztransporter, zum Transport und/oder Verladen von land- oder forstwirtschaftlichen Gütern angeordnet.

Gemäß einer vorteilhaften Ausgestaltung der Erfindung ist vorgesehen, dass die Kranbasis an wenigstens einer Mantelfläche wenigstens eine, vorzugsweise in stoffschlüssiger Verbindung mit der wenigstens einen Mantelfläche stehende, Aufnahme aufweist, wobei das wenigstens eine Befestigungsmittel zumindest bereichsweise innerhalb der wenigstens einen Aufnahme angeordnet ist.

Durch wenigstens eine Aufnahme wird ein Einschieben des wenigstens einen Befestigungsmittels erleichtert, wodurch Zeit in der Befestigung des Kranes am Hilfsrahmen gespart und ein erhöhter Komfort gegeben wird. Zudem wird eine Kraftübertragung auf das wenigstens eine Befestigungsmittel in eine Querrichtung und/oder Längsrichtung besonders begünstigt, wodurch eine besonders sichere Befestigungsanordnung gewährleistet wird.

Als günstig hat sich erwiesen, dass die wenigstens eine Befestigungskomponente in Form eines Bleches, vorzugsweise eine Dicke im Bereich zwischen 5 mm und 35 mm aufweisend, ausgebildet ist.

Das Blech ist kostenschonend in der Herstellung und es wird ermöglicht, durch eine Geometrie und/oder bauliche Größe des Bleches auf die Anforderungen der Befestigungsanordnung eingehen zu können.

Besonders bevorzugt ist das Blech eben ausgeführt. Dadurch wird eine platzsparende Befestigungskomponente der Befestigungsanordnung geboten.

Gemäß einer vorteilhaften Ausführungsform der Erfindung ist vorgesehen, dass das wenigstens eine Befestigungsmittel in Form wenigstens einer Schraubverbindung vorliegt.

Durch eine Schraubverbindung ist die Befestigung des Kranes auf dem Hilfsrahmen benutzerfreundlich zu lösen. Des Weiteren kann eine Variation einer Vorspannkraft der wenigstens einen Schraubverbindung besonders effizient generiert werden.

Als vorteilhaft hat sich erwiesen, dass das wenigstens eine Befestigungsmittel wenigstens einen Langbolzen umfasst.

Durch wenigstens einen Langbolzen kann eine Hebelwirkung durch einen über den wenigstens einen Langbolzen wirkenden Hebelarm besonders effektiv zur Befestigung des Kranes an dem Hilfsrahmen ausgenützt werden.

Eine vorteilhafte Variante besteht darin, dass das wenigstens eine Befestigungsmittel wenigstens eine Distanzhülse umfasst, wobei sich die wenigstens eine Distanzhülse von der wenigstens einen Befestigungskomponente zu der Kranbasis erstreckt.

Durch die wenigstens eine Distanzhülse kann eine Auflagefläche sowohl an der Kranbasis als auch an der wenigstens einen Befestigungskomponente generiert werden, wodurch einer Durchbiegung der wenigstens einen Befestigungskomponente relativ zur Kranbasis, insbesondere bei hohen Verspannkräften zur lagesicheren Befestigung des Kranes an dem Hilfsrahmen, entgegengewirkt werden kann.

Hohe auftretende Kräfte auf das wenigstens eine Befestigungsmittel der Befestigungsanordnung können über eine erwirkte geometrische Verlängerung abgeführt werden, wobei das wenigstens eine Befestigungsmittel nicht beschädigt wird. Somit werden die Steifigkeit und/oder eine Standzeit der Befestigungsanordnung erhöht.

Besonders bevorzugt ist, dass der Hilfsrahmen wenigstens ein Abdeckblech umfasst, wobei vorzugsweise vorgesehen ist, dass das wenigstens eine Abdeckblech stoffschlüssig mit dem Hilfsrahmen verbunden ist.

Durch das wenigstens eine Abdeckblech wird eine Verunreinigung des wenigstens einen Befestigungsmittels reduziert.

Zudem kann beispielsweise eine Mutter einer Schraubverbindung vor der Befestigung des Krans an dem Hilfsrahmen auf dem wenigstens einen Abdeckblech angeordnet werden, wodurch der Komfort in der Benutzung der wenigstens einen Befestigungsanordnung erhöht wird.

Bei einem Ausführungsbeispiel der Erfindung ist vorgesehen, dass das wenigstens eine Abdeckblech wenigstens eine Öffnung für den wenigstens einen Langbolzen aufweist, wobei vorzugsweise vorgesehen ist, dass die wenigstens eine Öffnung ein Gewinde aufweist.

Durch die wenigstens eine Öffnung ist eine Länge des wenigstens einen Langbolzens nicht durch eine konstruktive Ausgestaltung des wenigstens einen Abdeckbleches eingeschränkt, wobei der wenigstens eine Langbolzen durch die wenigstens eine Öffnung herausragen kann.

Ist die wenigstens eine Öffnung mit einem Gewinde versehen, so kann das wenigstens eine Abdeckblech zusätzlich zu der wenigstens einen Befestigungskomponente auftretende Kräfte in der Befestigungsanordnung aufnehmen und an den Hilfsrahmen und/oder Fahrzeugrahmen übertragen. Hierfür können beispielsweise weitere Muttern zur zusätzlichen Befestigung herangezogen werden.

Gemäß einem bevorzugten Ausführungsbeispiel der Erfindung ist vorgesehen, dass die wenigstens eine Befestigungskomponente zumindest bereichsweise über wenigstens eine Seitenfläche der wenigstens einen Befestigungskomponente an wenigstens einem Verbindungsblech des Hilfsrahmens, vorzugsweise stoffschlüssig, angeordnet ist.

Dadurch wird eine Stabilität der wenigstens einen Befestigungskomponente erhöht, wodurch größere Kräfte durch die wenigstens eine Befestigungskomponente aufgenommen werden können.

Als günstig hat sich erwiesen, dass das wenigstens eine Verbindungsblech in einem Bereich zwischen zweier Befestigungskomponenten eine Aussparung aufweist.

Dadurch wird Material des wenigstens einen Verbindungsbleches eingespart und/oder ein Kräftefluss bei einer starken Durchbiegung des Hilfsrahmens besonders begünstigt. Weiters wird ein Raum hinter dem wenigstens einen Verbindungsblech einfacher zugänglich. Des Weiteren wird eine ästhetisch ansprechendere Befestigungsvorrichtung erwirkt.

Wenn das wenigstens eine Abdeckblech, vorzugsweise stoffschlüssig, an dem wenigstens einen Verbindungsblech angeordnet ist, wird ermöglicht, dass über das wenigstens eine Abdeckblech erhöhte Kräfte beispielsweise bei Bewegungen des Hilfsrahmens und/oder der Kranbasis aufnehmbar sind. Zudem kann eine kompaktere Befestigungsanordnung gegeben werden.

Des Weiteren kann beispielsweise eine auf dem wenigstens einen Abdeckblech verortete Mutter einer Schraubverbindung an dem wenigstens einen Verbindungsblech zur Anlage gebracht werden, wodurch ein Verrutschen des wenigstens einen Befestigungsmittels bei der Befestigung des Krans auf dem Hilfsrahmen gehemmt wird.

Gemäß einer vorteilhaften Ausgestaltung der Erfindung ist vorgesehen, dass wenigstens eine Verdrehsicherung, vorzugsweise in Form eines zu einer Mutter korrespondierenden Blechteiles, an dem wenigstens einem Abdeckblech und/oder dem wenigstens einen Verbindungsblech angeordnet ist.

Durch wenigstens eine Verdrehsicherung kann die Befestigung des Krans an dem Hilfsrahmen beispielsweise über eine Schraubverbindung mit einer Mutter erleichtert werden, da ein Benutzer der Befestigungsanordnung lediglich die Mutter an der Verdrehsicherung anordnen muss und die Mutter nicht per Hand gegen ein Verdrehen bei der Befestigung sichern muss. Nach einer Anordnung der Mutter an der Verdrehsicherung kann das wenigstens eine Befestigungsmittel beispielsweise oberhalb der wenigstens einen Aufnahme eingeschoben und angezogen werden.

Des Weiteren ist durch die wenigstens eine Verdrehsicherung ein gesondertes Anziehen beispielsweise der Mutter des wenigstens einen Befestigungsmittels nicht notwendig.

In einer weiteren Ausführungsform ist vorgesehen, dass die wenigstens eine Befestigungskomponente in vertikaler Richtung im Bereich zwischen 5 cm und 20 cm, vorzugsweise zwischen 7 cm und 15 cm, von der Kranbasis beabstandet ist.

Durch die Beabstandung der wenigstens einen Befestigungskomponente von der Kranbasis können erhöhte Kräfte durch die Befestigungsanordnung aufgenommen werden, da die Hebelwirkung der wenigstens einen Befestigungskomponente vergrößert wird.

In einem vorteilhaften Ausführungsbeispiel der Erfindung ist vorgesehen, dass die zwei Längsträger über die wenigstens eine Befestigungskomponente in Längsrichtung und/oder in vertikaler Richtung beidseitig über die wenigstens eine Befestigungskomponente vorstehen.

Dadurch wird eine Verunreinigung der Befestigungsanordnung reduziert und ein ästhetisch ansprechenderes Fahrzeug gegeben.

Als günstig hat sich erwiesen, dass die wenigstens eine Befestigungskomponente in stoffschlüssiger Verbindung mit einem, vorzugsweise beiden, der zwei Längsträger steht.

Dadurch sind Querstreben zur Befestigung der Kranbasis auf dem Hilfsrahmen nicht erforderlich, da ein direkter Kraftschluss zwischen der Kranbasis und dem Längsträger des Hilfsrahmens über die wenigstens eine Befestigungskomponente generiert wird.

Die wenigstens eine Befestigungskomponente kann jedoch auch als Teil des Längsträgers ausgebildet sein.

Besonders bevorzugt ist vorgesehen, dass an beiden der zwei Längsträger wenigstens zwei, vorzugsweise genau zwei, Befestigungskomponenten angeordnet sind, wobei die wenigstens zwei Befestigungskomponenten unterhalb wenigstens zweier Aufnahmen einer Mantelfläche angeordnet und/oder voneinander beabstandet sind.

Durch die Anordnung unterhalb wenigstens zweier Aufnahmen wird eine Befestigung des wenigstens einen Befestigungsmittels erleichtert.

Durch wenigstens zwei Befestigungskomponenten am Längsträger können Fertigungsungenauigkeiten und/oder Verformungen der an der Befestigung der Kranbasis am Hilfsrahmen beteiligten Komponenten kompensiert werden. Zudem kann durch einen zwischen den Befestigungskomponenten wirkendenden Hebelarm eine Hebelwirkung begünstigend für eine Kraftübertragung von der Kranbasis über die wenigstens eine Befestigungsvorrichtung auf den Hilfsrahmen genützt werden. Ein Abstand zwischen den wenigstens zwei Befestigungskomponenten ist im Allgemeinen beliebig. Besonders bevorzugt ist jedoch ein möglichst großer Abstand zwischen den wenigstens zwei Befestigungskomponenten.

Als günstig hat sich erwiesen, dass an der wenigstens einen Befestigungskomponente wenigstens zwei, vorzugsweise genau zwei, Befestigungsmittel angeordnet sind.

Dadurch wird die Stabilität der Befestigungsanordnung besonders begünstigt und es kann eine erhöhte Kraftübertragung von der Kranbasis auf den Hilfsrahmen über die wenigstens zwei Befestigungsmittel generiert werden.

Eine vorteilhafte Ausgestaltung der Erfindung besteht darin, dass die Befestigungsanordnung an einem einem Fahrzeughaus zugewandten Ende und/oder an einem einem Fahrzeughaus abgewandten Ende angeordnet ist.

Ist die Befestigungsanordnung am zugewandten Ende des Fahrzeughauses angeordnet, kann Zeit im Besetzen eines Bedieners des Kranes aus dem Fahrzeughaus gespart werden.

Ist die Befestigungsanordnung am abgewandten Ende des Fahrzeughauses angeordnet, wird eine Gefahr reduziert, beispielsweise das Fahrzeughaus durch einen über die Befestigungsanordnung befestigten Kran zu beschädigen.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1a: einen Forstanhänger mit einer Befestigungsanordnung gemäß einem bevorzugten Ausführungsbeispiel, wobei eine über einem Hilfsrahmen angeordnete Kranbasis auf dem Hilfsrahmen montiert ist, in einer schematisch dargestellten Ansicht von der Rückseite,
- Fig. 1b: einen Holztransporter mit einer über einem Hilfsrahmen angeordneten Kranbasis, wobei die Kranbasis über eine Befestigungsanordnung auf dem Hilfsrahmen befestigt ist, in einer schematisch dargestellten Ansicht von der Seite,
- Fig. 2: die Befestigungsanordnung gemäß dem Ausführungsbeispiel nach Fig. 1a in einem um 90 ° gedrehten, vergrößert dargestellten Ausschnitt in einer Ansicht von der Rückseite.

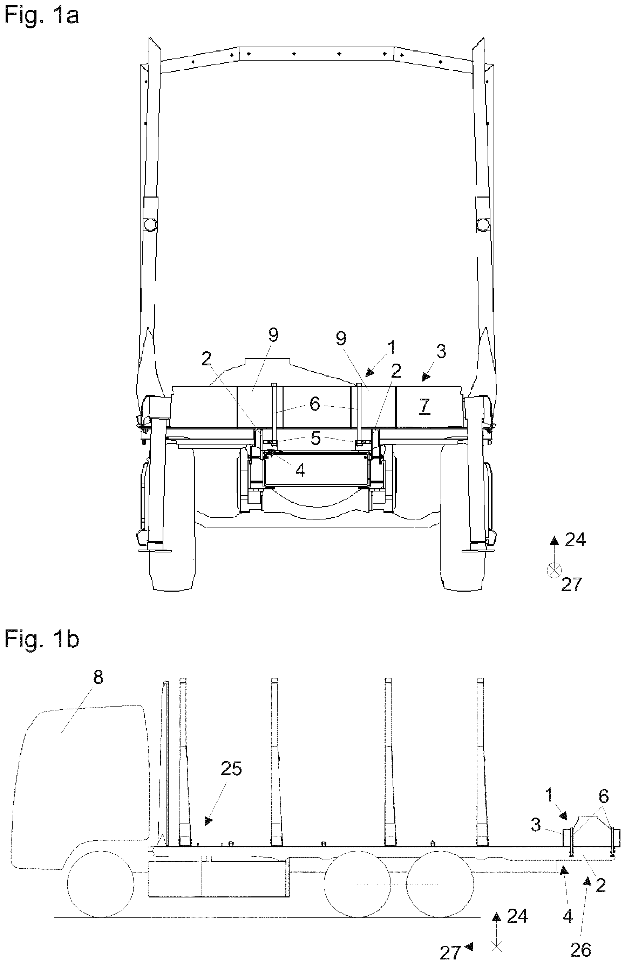

Fig. 1a zeigt eine Befestigungsanordnung 1 umfassend einen Hilfsrahmen 4 mit zwei Längsträgern 2 und einer oberhalb des Hilfsrahmens 4 angeordneten Kranbasis 3. Die Anzahl an Längsträgern 2 ist im Allgemeinen beliebig; besonders bevorzugt sind jedoch Fahrzeuge mit zwei Längsträgern 2.

Zwischen den zwei Längsträgern 2 sind vier Befestigungskomponenten 5 angeordnet (zwei Befestigungskomponenten 5 sind durch die vorderen zwei Befestigungskomponenten 5 verdeckt), wobei die vier Befestigungskomponenten 5 in stoffschlüssiger Verbindung mit dem Hilfsrahmen 4 stehen. Die Kranbasis 3 ist durch die vier Befestigungsmittel 6 über vier Befestigungskomponenten 5 mit dem Hilfsrahmen 4 lösbar verbunden.

Die Befestigungskomponenten 5 stehen in stoffschlüssiger Verbindung mit einem der beiden Längsträgern 2.

Die vier Befestigungskomponenten 5 und die vier Befestigungsmittel 6 sind vollständig zwischen den zwei Längsträgern 2 angeordnet. Die vier Befestigungsmittel 6 ragen in einer vertikalen Richtung 24 nach oben aus dem Hilfsrahmen 4 und der Kranbasis 3 heraus. Die vier Befestigungskomponenten 5 ragen in vertikaler Richtung 24 weder nach unten noch nach oben über die zwei Längsträger 2.

Die Kranbasis 3 weist an einer Mantelfläche 7 zwei in stoffschlüssiger Verbindung 10 mit der Mantelfläche 7 stehende Aufnahmen 9 auf, wobei an einer rückseitigen Mantelfläche 7 zwei weitere in stoffschlüssiger Verbindung 10 mit der Mantelfläche 7 stehende Aufnahmen 9 angeordnet sind. Die vier Befestigungsmittel 6 sind bereichsweise innerhalb der vier Aufnahmen 9 angeordnet.

Der Hilfsrahmen 4 liegt stoffschlüssig in Form eines verschweißten Hilfsrahmens 4 mit zwei Längsträgern 2 vor, wobei am verschweißten Hilfsrahmen 4 die Befestigungskomponenten 5 ebenfalls am Hilfsrahmen 4 angeschweißt sind. Gesonderte Querstreben zur Befestigung der Kranbasis 3 am Hilfsrahmen sind nicht erforderlich.

Fig. 1b zeigt einen Holztransporter mit einer solchen Befestigungsanordnung 1, welche eine Kranbasis 3 mit einem oberhalb eines Fahrzeugrahmens angeordneten Hilfsrahmen 2 verbindet.

Die Befestigungsanordnung 1 ist an einem einem Fahrzeughaus 8 abgewandten Ende 26 angeordnet. Im Allgemeinen ist jedoch auch eine Befestigungsanordnung 1 möglich, welche an einem dem Fahrzeughaus 8 zugewandten Ende 25 positioniert ist.

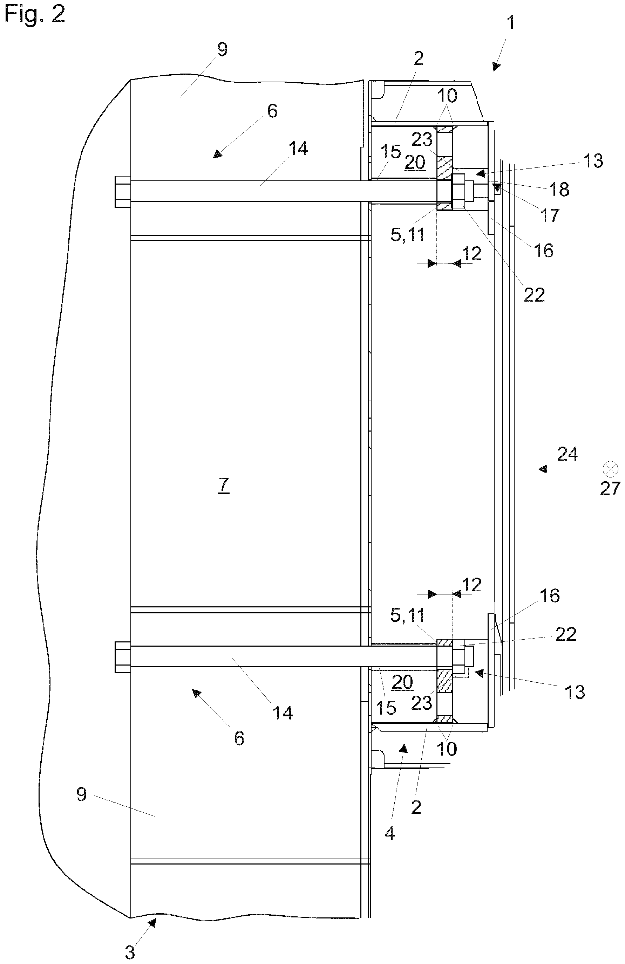

Fig. 2 zeigt die Befestigungsanordnung 1 nach Fig. 1a in vergrößerter Darstellung mit einem Detailausschnitt des Hilfsrahmens 4 und der Kranbasis 3, wobei die Befestigungsanordnung 1 in vertikaler Richtung 24 um 90 ° gedreht dargestellt ist.

Die vier Befestigungskomponenten 5 sind in Form eines Bleches 11 mit einer Dicke 12 von 20 mm ausgebildet. Je nach Anzahl an Befestigungskomponenten 5 und einer Anforderung an die Befestigungsanordnung 1 kann die Dicke 12 jedoch ein niedrigeres oder höheres Ausmaß aufweisen.

Die vier Befestigungsmittel 6 liegen in Form einer Schraubverbindung 13 vor. Die vier Befestigungskomponenten 5 weisen jeweils zwei Bohrungen zur Aufnahme einer Schraubverbindung 13, wobei in den zwei Bohrungen nur eine Schraubverbindung 13 angeordnet ist. Bei höheren Kräften auf die Befestigungsanordnung 1 können weitere Befestigungsmittel 6 in den Bohrungen angeordnet und die Stabilität der Befestigungsanordnung 1 erhöht werden. Besonders bevorzugt sind an vier Befestigungskomponenten 5 jeweils zwei Befestigungsmittel 6 angeordnet.

Die vier Befestigungsmittel 6 umfassen einen Langbolzen 14 und eine Distanzhülse 15, wobei sich die vier Distanzhülsen 15 von den vier Befestigungskomponenten 5 zu der Kranbasis 3 erstrecken.

Der Hilfsrahmen 4 umfasst vier Abdeckbleche 16, wobei die vier Abdeckbleche 16 stoffschlüssig mit dem Hilfsrahmen 4 verbunden sind. Als stoffschlüssige Verbindung 10 sind Schweißnähte vorgesehen. Zwei der vier Abdeckbleche 16 weisen eine Öffnung 17 für die Langbolzen 14 auf, wobei die zwei Öffnungen 17 ein Gewinde 18 aufweisen. Im Allgemeinen können jedoch sämtliche Abdeckbleche 16 eine, mehrere oder keine Öffnungen 17 aufweisen.

Die vier Befestigungskomponenten 5 sind jeweils bereichsweise über eine Seitenfläche der Befestigungskomponenten 5 an einem von zwei Verbindungsblechen 20 des Hilfsrahmens 4 stoffschlüssig angeordnet.

Die zwei Verbindungsbleche 20 weisen in einem Bereich zwischen zweier Befestigungskomponenten 5 keine Aussparung auf. Im Allgemeinen kann jedoch eine Aussparung in den Verbindungsblechen 20 vorgesehen sein. Jeweils zwei der vier Abdeckbleche 16 sind stoffschlüssig an einem der zwei Verbindungsbleche 20 angeordnet.

Zwei Verdrehsicherungen 23 in Form eines zu einer Mutter 22 korrespondierenden Blechteiles 23 sind an zwei der vier Abdeckbleche 16 und dem jeweils einem der zwei Verbindungsbleche 20 angeordnet. Die Verdrehsicherungen 23 können jedoch auch korrespondierend zu einem anderen Befestigungsmittel 6 ausgestaltet sein.

Im Bereich der Mutter 22 ist eine weitere Aussparung des Verbindungsbleches 20 möglich, um eine Zugänglichkeit von Werkzeugen zur Befestigung der Befestigungsmittel 6 zu erleichtern.

Die vier Befestigungskomponenten 5 sind in vertikaler Richtung 24 11 cm von der Kranbasis 3 beabstandet. Die vier Befestigungskomponenten 5 können jedoch je nach Anzahl der Befestigungskomponenten 5 und Anforderungen an die Befestigungsanordnung 1 unterschiedlich weit von der Kranbasis 3 beabstandet sein.

Der Hilfsrahmen 4 ist an einem Fahrzeugrahmen über weitere Schraubverbindungen befestigt.

Die zwei Längsträger 2 stehen über die vier Befestigungskomponenten 5 in Längsrichtung 27 und in vertikaler Richtung 24 beidseitig über vier Befestigungskomponenten 5 normal auf die Bildebene vor.

An beiden der zwei Längsträger 2 sind genau zwei Befestigungskomponenten 5 angeordnet, wobei die zwei Befestigungskomponenten 5 unterhalb zweier Aufnahmen 9 einer Mantelflächen 7 angeordnet und voneinander beabstandet sind. Die weiteren zwei Befestigungskomponenten 5 sind unterhalb zweier weiterer Aufnahmen 9 einer weiteren Mantelfläche 7, welche an einer gegenüberliegenden Seite der Kranbasis 3 verortet ist, angeordnet und voneinander beabstandet.

### Bezugszeichenliste:

- 1: Befestigungsanordnung
- 2: Längsträger
- 3: Kranbasis
- 4: Hilfsrahmen
- 5: Befestigungskomponente
- 6: Befestigungsmittel
- 7: Mantelfläche
- 8: Fahrzeughaus
- 9: Aufnahme
- 10: stoffschlüssige Verbindung
- 11: Blech
- 12: Dicke
- 13: Schraubverbindung
- 14: Langbolzen
- 15: Distanzhülse
- 16: Abdeckblech
- 17: Öffnung
- 18: Gewinde
- 20: Verbindungsblech
- 22: Mutter
- 23: Verdrehsicherung
- 24: vertikale Richtung
- 25: zugewandtes Ende
- 26: abgewandtes Ende
- 27: Längsrichtung

## Patentansprüche

1. Befestigungsanordnung (1) umfassend einen Hilfsrahmen (4) mit zwei Längsträgern (2) und einer oberhalb des Hilfsrahmens (4) angeordneten Kranbasis (3), **dadurch gekennzeichnet, dass** zwischen den zwei Längsträgern (2) wenigstens eine Befestigungskomponente (5) angeordnet ist, wobei die wenigstens eine Befestigungskomponente (5) in stoffschlüssiger Verbindung mit dem Hilfsrahmen (4) steht und die Kranbasis (3) durch wenigstens ein Befestigungsmittel (6) über die wenigstens eine Befestigungskomponente (5) mit dem Hilfsrahmen (4) lösbar verbindbar oder verbunden ist.

2. Befestigungsanordnung (1) nach Anspruch 1, wobei die Kranbasis (3) an wenigstens einer Mantelfläche (7) wenigstens eine, vorzugsweise in stoffschlüssiger Verbindung (10) mit der wenigstens einen Mantelfläche (7) stehende, Aufnahme (9) aufweist, wobei das wenigstens eine Befestigungsmittel (6) zumindest bereichsweise innerhalb der wenigstens einen Aufnahme (9) angeordnet ist.

3. Befestigungsanordnung (1) nach einem der vorangehenden Ansprüche, wobei die wenigstens eine Befestigungskomponente (5) in Form eines Bleches (11), vorzugsweise eine Dicke (12) im Bereich zwischen 5 mm und 35 mm aufweisend, ausgebildet ist.

4. Befestigungsanordnung (1) nach einem der vorangehenden Ansprüche, wobei das wenigstens eine Befestigungsmittel (6) in Form wenigstens einer Schraubverbindung (13) vorliegt.

5. Befestigungsanordnung (1) nach einem der vorangehenden Ansprüche, wobei das wenigstens eine Befestigungsmittel (6) wenigstens einen Langbolzen (14) umfasst.

6. Befestigungsanordnung (1) nach einem der vorangehenden Ansprüche, wobei das wenigstens eine Befestigungsmittel (6) wenigstens eine Distanzhülse (15) umfasst, wobei sich die wenigstens eine Distanzhülse (15) von der wenigstens einen Befestigungskomponente (5) zu der Kranbasis (3) erstreckt.

7. Befestigungsanordnung (1) nach einem der vorangehenden Ansprüche, wobei der Hilfsrahmen (4) wenigstens ein Abdeckblech (16) umfasst, wobei vorzugsweise vorgesehen ist, dass das wenigstens eine Abdeckblech (16) stoffschlüssig mit dem Hilfsrahmen (4) verbunden ist, und/oder das wenigstens eine Abdeckblech (16) wenigstens eine Öffnung (17) für den wenigstens einen Langbolzen (14) aufweist, wobei vorzugsweise vorgesehen ist, dass die wenigstens eine Öffnung (17) ein Gewinde (18) aufweist.

8. Befestigungsanordnung (1) nach einem der vorangehenden Ansprüche, wobei die wenigstens eine Befestigungskomponente (5) zumindest bereichsweise über wenigstens eine Seitenfläche der wenigstens einen Befestigungskomponente (5) an wenigstens einem Verbindungsblech (20) des Hilfsrahmens (4), vorzugsweise stoffschlüssig, angeordnet ist und/oder das wenigstens eine Verbindungsblech (20) in einem Bereich zwischen zweier Befestigungskomponenten (5) eine Aussparung aufweist.

9. Befestigungsanordnung (1) nach Anspruch 8, wobei das wenigstens eine Abdeckblech (16), vorzugsweise stoffschlüssig, an dem wenigstens einen Verbindungsblech (20) angeordnet ist und/oder wenigstens eine Verdrehsicherung (23), vorzugsweise in Form eines zu einer Mutter (22) korrespondierenden Blechteiles, an dem wenigstens einem Abdeckblech (16) und/oder dem wenigstens einen Verbindungsblech (20) angeordnet ist und/oder

10. Befestigungsanordnung (1) nach einem der vorangehenden Ansprüche, wobei die wenigstens eine Befestigungskomponente (5) in vertikaler Richtung (24) im Bereich zwischen 5 cm und 20 cm, vorzugsweise zwischen 7 cm und 15 cm, von der Kranbasis (3) beabstandet ist.

11. Befestigungsanordnung (1) nach einem der vorangehenden Ansprüche, wobei die zwei Längsträger (2) über die wenigstens eine Befestigungskomponente (5) in Längsrichtung (27) und/oder in vertikaler Richtung (24) beidseitig über die wenigstens eine Befestigungskomponente (5) vorstehen.

12. Befestigungsanordnung (1) nach einem der vorangehenden Ansprüche, wobei die wenigstens eine Befestigungskomponente (5) in stoffschlüssiger Verbindung mit einem, vorzugsweise beiden, der zwei Längsträgern (2) steht.

13. Befestigungsanordnung (1) nach einem der Ansprüche 2 bis 12, wobei an beiden der zwei Längsträger (2) wenigstens zwei, vorzugsweise genau zwei, Befestigungskomponenten (5) angeordnet sind, wobei die wenigstens zwei Befestigungskomponenten (5) unterhalb wenigstens zweier Aufnahmen (9) einer Mantelfläche (7) angeordnet und/oder voneinander beabstandet sind.

14. Befestigungsanordnung (1) nach einem der vorangehenden Ansprüche, wobei an der wenigstens einen Befestigungskomponente (5) wenigstens zwei, vorzugsweise genau zwei, Befestigungsmittel (6) angeordnet sind.

15. Befestigungsanordnung (1) nach einem der vorangehenden Ansprüche, wobei die Befestigungsanordnung (1) an einem einem Fahrzeughaus (8) zugewandten Ende (25) und/oder an einem einem Fahrzeughaus (8) abgewandten Ende (26) angeordnet ist.
